# EUROPEAN PATENT SPECIFICATION

(11) **EP 2 828 132 B1**
(45) Date of publication and mention of the grant of the patent: **14.09.2016**
(21) Application number: 13718887.6
(22) Date of filing: 15.03.2013
(51) Int. Cl.: B60T 7/04, B60T 13/58, B60T 13/74

(54) **BRAKE DEVICE**
BREMSANORDNUNG
APPAREIL DE FREINAGE

(30) Priority: 21.03.2012 JP 2012063988
(43) Date of publication of application: 28.01.2015
(73) Proprietor: TOYOTA JIDOSHA KABUSHIKI KAISHA, Toyota-shi, Aichi 471-8571 (JP); Advics Co., Ltd., Kariya-shi, Aichi 448-8688 (JP)
(72) Inventor: YAMAMOTO, Shinsuke, Aichi-Ken 471-8571 (JP); YABUSAKI, Naoki, Aichi-Ken 471-8571 (JP); KODAMA, Hiroyuki, Aichi-Pref 448-8688 (JP)
(74) Representative: Winter, Brandl, Fürniss, Hübner, Röss, Kaiser, Polte - Partnerschaft mbB
(86) International application number: PCT/IB2013/000386
(87) International publication number: WO 2013/140221

(56) References cited:
- WO-A1-2010/069679
- DE-A1-102011 084 206
- JP-A- 2010 241 389

## Description

### BACKGROUND OF THE INVENTION

### 1. Field of the Invention

The invention relates to a brake device, and more particularly, to technology for controlling a brake device of a vehicle that mainly uses an electric brake.

### 2. Description of Related Art

As a related brake device for a vehicle, a hydraulic brake device is known that generates hydraulic braking force by pressing a friction member against a disc rotor by supplying hydraulic pressure generated in a master cylinder to a wheel cylinder of a brake device in each wheel, in response to depression of a brake pedal. Also, in recent years, following the practical realization of electric vehicles and hybrid vehicles, a regenerative brake device that decelerates or stops a vehicle using regenerative braking force generated when generating power by regeneratively driving a motor for running (i.e., a running motor) is being put into practical use. Furthermore, an electric brake device that generates braking force by pressing a friction member against a disc rotor, which is accomplished by moving a moving member by driving a gear train with a motor, is also being put into practical use.

In this way, there is a variety of types of brake devices that apply braking force to a wheel of a vehicle. Braking performance is increased and the brake devices are being made smaller and the like by using a combination of different types of brake devices. For example, a brake device described in Japanese Patent Application Publication No. 2004-351965 (JP 2004-351965 A) combines a hydraulic brake device and an electric brake device. Also, the hydraulic brake device is able to be made smaller by dividing the generated braking force into hydraulic braking force and electric braking force. Also, normally a booster required for the hydraulic brake device is able to be omitted. Similarly, Japanese Patent Application Publication No. 2010-241389 (JP 2010-241389 A) and Japanese Patent Application Publication No. 2009-115313 (JP 2009-115313 A) and the like describe a brake device that combines a hydraulic brake device and an electric brake device in attempt to improve performance and reduce the size.

A currently mainstream hydraulic brake device excels in being able to generate braking force as long as hydraulic pressure is able to be supplied to the wheel cylinder. On the other hand, operating fluid needs to be delivered to the wheel cylinder of each wheel from an accumulator or a master cylinder that serves as a hydraulic pressure source, so a long hydraulic line and a hydraulic actuator for controlling the hydraulic pressure are necessary. However, a long hydraulic line tends to interfere with other component parts of the vehicle, and thus reduces the degree of freedom in design. A long hydraulic line also complicates the work of assembling the vehicle. Furthermore, countermeasures for leakage from the long hydraulic line and the hydraulic actuator having a complex structure are necessary, which takes up more space and further reduces the degree of freedom.

Therefore, there is a desire to use an electric brake mechanism that saves space and is relatively easy to make smaller and lighter, and that enables precise brake control with only a cable connection and does not require a hydraulic line or a hydraulic actuator, as the main brake device. However, even an electric brake mechanism requires countermeasures against problems such as disconnection and insufficient electric power. That is, when the electric brake mechanism is operating normally, it is necessary to provide a backup brake device that can easily be made small with a simple structure in which an electric brake mechanism is made to function when it is operating normally, and a minimum required braking force is able to be stably ensured if there is a problem with the electric brake mechanism or the like.

### SUMMARY OF THE INVENTION

In view of the foregoing situation, the invention provides a compound brake device having a simple structure in which a hydraulic brake mechanism is basically not made to function when an electric brake mechanism is operating normally and braking force of the hydraulic brake mechanism for safely stopping is able to be ensured if there is a problem with the electric brake mechanism or the like.

Therefore, one aspect of the invention relates to a brake device that includes an electric brake mechanism configured to apply electric braking force to a rotating body that rotates together with a wheel, by pressing a friction member against the rotating body with driving force generated by operation of a motor; a hydraulic brake mechanism configured to apply hydraulic braking force to the rotating body by pressing the friction member against the rotating body with driving force generated by supplying operating fluid; a control portion configured to direct the electric brake mechanism to generate the electric braking force according to an operation amount of a brake pedal operated by a driver; a reservoir configured to store the operating fluid; and a master cylinder that has a discharge port that discharges the operating fluid that is inside of the master cylinder to the reservoir, a volume of the master cylinder changing according to the operation amount of the brake pedal, and the master cylinder being configured to deliver the operating fluid to the hydraulic brake mechanism according to a reduction in the volume.

According to the brake device described above, when the brake pedal is depressed when the electric brake mechanism is functioning normally, electric braking force according to that depression amount is generated. Also, the discharge port that discharges operating fluid within the master cylinder to the reservoir is provided, so even if the brake pedal is depressed, operating fluid will not be delivered to the wheel cylinder, so hydraulic braking force will not be generated. On the other hand, when there is a problem with the electric brake mechanism, hydraulic braking force is able to be generated by delivering operating fluid to the wheel cylinder with only a depression operation of the brake pedal, simply by closing off the discharge port and preventing operating fluid from being discharged to the reservoir.

Also, the discharge port may be configured to discharge the operating fluid that is in the master cylinder to the reservoir until the brake pedal is depressed a predetermined amount. Further, the master cylinder may be configured such that when the brake pedal is depressed the predetermined amount, the operating fluid that is in the master cylinder is unable to be discharged to the reservoir, such that hydraulic pressure within the master cylinder rises and hydraulic braking force is generated. That is, operating fluid is delivered to the hydraulic brake mechanism such that hydraulic braking force is able to be generated, when the depression amount of the brake pedal exceeds a predetermined amount. As a result, in the event that electric braking force is unable to be generated when there is a problem with the electric brake mechanism, the hydraulic brake mechanism functions as a backup brake device when the brake pedal is depressed to a position beyond the discharge port. The hydraulic brake mechanism may be provided for each wheel, or it may be arranged only in the front wheels where the braking distribution is large. In this case, the length of the hydraulic line from the master cylinder to the hydraulic brake mechanism is short, so it is easier to ensure space for arranging the line, and a countermeasure against leakage is easier. Also, the work of arranging the line when assembling the vehicle is also easier.

The brake device described above may also include a regulating mechanism that is provided in a flow path of the operating fluid between the discharge port and the reservoir, and that is configured to regulate the discharge of the operating fluid that is discharged from the master cylinder to the reservoir. In this case, the timing at which hydraulic braking force starts to be generated, and the amount of hydraulic braking force that is generated are able to be regulated. For example, braking force assist with hydraulic braking force is possible, so the range of braking force control is easily able to be increased even when the electric brake mechanism is functioning normally.

Here, the regulating mechanism may include an on-off valve. Also, the on-off valve may be a normally-closed valve that closes when de-energized and opens when energized. When the regulating mechanism is a normally-closed on-off valve in this way, the regulating mechanism closes when de-energized and opens when energized, so even if electric braking force is unable to be sufficiently generated due to a problem with the electric brake mechanism, the hydraulic brake mechanism will function by the on-off valve closing, and will be able to generate hydraulic braking force, so braking force is able to be reliably ensured.

The control portion may be configured to control a generated amount of the hydraulic braking force by controlling the regulating mechanism, when the electric braking force is less than a braking force corresponding to an operation of the brake pedal. The timing at which hydraulic braking force is generated, and the amount of hydraulic braking force that is generated are able to be precisely regulated by controlling the regulating mechanism. As a result, if electric braking force is unable to be generated, or if electric braking force is able to be generated but not in required amount, for example, hydraulic braking force can be easily added to compensate for the lack of electric braking force, thereby enabling braking performance to be improved.

The brake device described above may also include a regenerative brake mechanism configured to generate regenerative braking force by regeneratively driving a motor capable of supplying driving force for running to the wheel. The control portion may be configured to control a generated amount of the hydraulic braking force by controlling the regulating mechanism, when braking force obtained by combining the electric braking force and the regenerative braking force is less than braking force corresponding to an operation of the brake pedal. If there is not a problem with the electric brake mechanism, regenerative driving of the running motor can be promoted by combining the electric braking force with the regenerative braking force to improve energy efficiency. The amount of regenerative braking force tends to change according to the state-of-charge (SOC) of the battery, but when there is not a problem with the electric brake mechanism, this amount can be offset by adjusting the electric braking force. Also, if the braking force from combining the electric braking force and the regenerative braking force is less than the braking force corresponding to the operation of the brake pedal, this insufficiency is able to be offset by adjusting the time at which the hydraulic braking force is started, and the amount of hydraulic braking force that is generated. As a result, braking performance can be improved, while energy efficiency of the vehicle is improved.

The invention thus makes it possible to provide a compound brake device having a simple structure in which a hydraulic brake mechanism is basically not made to function when an electric brake mechanism is operating normally and braking force of the hydraulic brake mechanism for safely stopping is able to be ensured if there is a problem with the electric brake mechanism.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram schematically showing the structure of a hybrid vehicle provided with a brake device according to one example embodiment of the invention;
FIG. 2 is a schematic diagram illustrating a position in which a discharge port is formed, and the internal structure of a master cylinder and the brake device according to the example embodiment;
FIGs. 3A and 3B are graphs illustrating a braking force generating state by opening and closing the discharge port of the brake device according to the example embodiment;
FIGs. 4A and 4B are flowcharts illustrating an example of control of the brake device according to the example embodiment; and
FIGs. 5A, 5B, 5C, 5D and 5E are graphs illustrating braking force generating examples according to the example of control of the brake device according to the example embodiment.

### DETAILED DESCRIPTION OF EMBODIMENTS

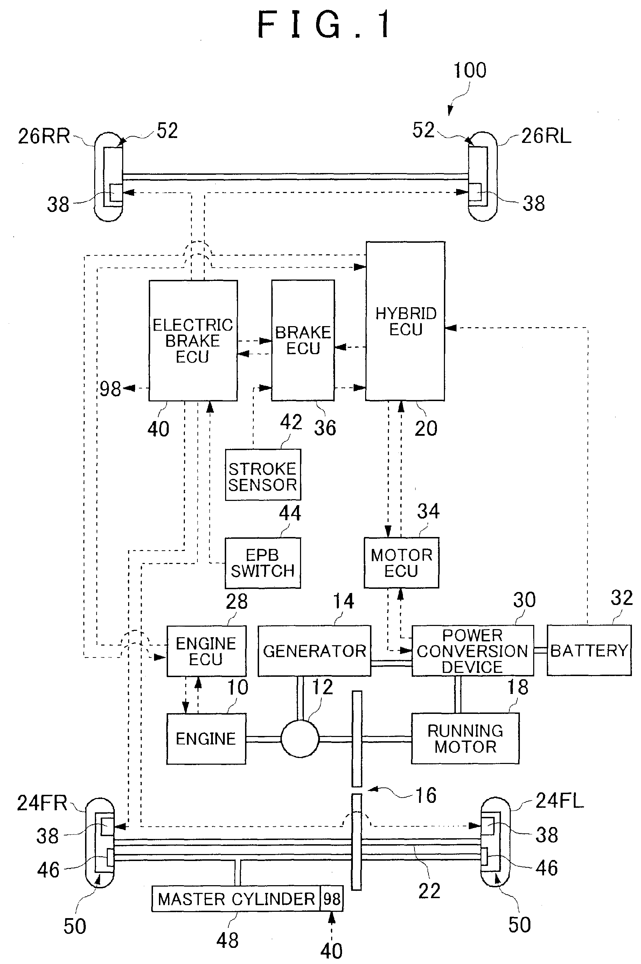

Hereinafter, example embodiments of the invention will be described in detail with reference to the accompanying drawings. FIG. 1 is a schematic of the structure of a hybrid vehicle provided with a compound brake device according to one example embodiment of the invention. In the description below, an example will be described in which mainly electric braking force is used as regular braking force, and regenerative braking force is used as appropriate. Also, in the description, when electric braking force and regenerative braking force are not able to be sufficiently obtained, braking force is ensured using hydraulic braking force as backup braking force. Also, in the configuration example in FIG. 1, the brake device on the left and right front wheel side where the braking force distribution is large is a compound brake device provided with an electric brake mechanism and a hydraulic brake mechanism, and the brake device on the left and right rear wheel side is a simple configuration brake device provided with only an electric brake mechanism. Of course, a compound brake device may be used for both the front and rear wheels, but the main objective for providing the hydraulic brake mechanism is for backup when there is a problem with the electric brake mechanism such as that described above or the like, so providing the compound brake device for only the left and right front wheels, for example, is sufficient. Providing a hydraulic brake mechanism for the front wheels is beneficial in that it enables the length of the hydraulic line to be shorter.

A hybrid vehicle 100 shown in FIG. 1 includes an engine 10, a three shaft-type power split device 12 that is connected to a crankshaft that is an output shaft of the engine 10, a generator 14 that is capable of generating power and is connected to the power split device 12, a running motor 18 that is connected to the power split device 12 via a transmission 16, and a hybrid electronic control unit (hereinafter, referred to as "hybrid ECU 20"; all electronic control units will hereinafter be referred to as "ECU") that controls the overall drive system of the hybrid vehicle 100. A right front wheel 24FR and a left front wheel 24FL of the hybrid vehicle 100 are connected to the transmission 16 via a drive shaft 22 (hereinafter, unless otherwise specified, the right front wheel 24FR and the left front wheel 24FL will simply be referred to as "front wheel" or ``front wheels"). In this example embodiment, a right rear wheel 26RR and a left rear wheel 26RL serve as driven wheels (hereinafter, unless otherwise specified, the right rear wheel 26RR and the left rear wheel 26RL will simply be referred to as "rear wheel" or "rear wheels").

The engine 10 is an internal combustion engine that operates using a hydrocarbon fuel such as gasoline or light oil, and is controlled by an engine ECU 28. The engine ECU 28 is able to communicate with the hybrid ECU 20, and executes various controls of the engine 10, such as fuel injection control, ignition control, and intake air control, based on control signals from the hybrid ECU 20, and signals from various sensors that detect the operating state of the engine 10. Also, the engine ECU 28 provides information related to the operating state of the engine 10 to the hybrid ECU 20 as necessary.

The power split device 12 serves to transmit output from the running motor 18 to the left and right front wheels 24LL and 24RL via the transmission 16, serves to distribute the output from the engine 10 to the generator 14 and the transmission 16, and increase or decrease the rotation speed of the running motor 18 and the engine 10. The generator 14 and the running motor 18 are each connected to a battery 32 via a power conversion device 30 that includes an inverter. A motor ECU 34 is connected to the power conversion device 30. The motor ECU 34 is also able to communicate with the hybrid ECU 20, and controls the generator 14 and the running motor 18 via the power conversion device 30 based on control signals from the hybrid ECU 20 and the like. The hybrid ECU 20, the engine ECU 28, and the motor ECU 34 are each configured as a microprocessor that includes a CPU. In addition to the CPU, each of the hybrid ECU 20, the engine ECU 28, and the motor ECU 34 is provided with ROM that stores various programs, RAM that temporarily stores data, and an input port and a communication port and the like.

The left and right front wheels 24LL and 24RL are able to be driven by output from the running motor 18, by supplying electric power from the battery 32 to the running motor 18 via the power conversion device 30, based on control by the hybrid ECU 20 and the motor ECU 34. Also, in an operating region where engine efficiency is good, the hybrid vehicle 100 is driven by the engine 10. At this time, the running motor 18 is able to be driven and the battery 32 is able to be charged via the power conversion device 30, using electric power generated by the generator 14, by transmitting a portion of the output from the engine 10 to the generator 14 via the power split device 12.

Also, when braking the hybrid vehicle 100, the running motor 18 is operated by power transmitted from the front wheels 24LL and 24RL, and the running motor 18 is made to operate as a generator, based on control by the hybrid ECU 20 and the motor ECU 34. That is, the running motor 18, the power conversion device 30, the hybrid ECU 20, and the motor ECU 34 and the like serve as a regenerative brake mechanism that brakes the hybrid vehicle 100 by regenerating the kinetic energy of the hybrid vehicle 100 to electric energy.

In this example embodiment, in addition to the regenerative brake mechanism, an electric brake mechanism 38 in which the electric braking force is controlled by an electric brake ECU 40 is provided for each wheel, so the electric braking force can be adjusted for each wheel. The details of the structure of the electric brake mechanism 38 will be described later, but electric braking force is applied to a rotating body that rotates together with the wheel, by pressing a friction member against the rotating body with driving force generated by operation of a motor. For example, when the electric brake mechanism 38 is applied to a disc brake device, a motor is housed in a caliper of the disc brake device. Electric braking force is generated by a nut member that advances and retreats with the driving of the motor pressing a brake pad that serves as the friction member against a brake disc that serves as the rotating body. By controlling the amount of rotation and the rotational direction and the like of the motor of each wheel with the electric brake ECU 40, braking force required by the driver is generated, and electric braking force in each wheel is controlled, e.g., an antilock brake (ABS) function or the like is also realized.

A brake ECU 36 and the electric brake ECU 40 are each configured as a microprocessor that includes a CPU. In addition to the CPU, the brake ECU 36 and the electric brake ECU 40 each include ROM that stores various programs, RAM that temporarily stores data, and an input port and a communication port and the like. The brake ECU 36, the electric brake ECU 40, and the hybrid ECU 20 are able to communicate with each other. The brake ECU 36 receives a signal from a stroke sensor 42 that detects a depression state of a brake pedal by a driver, determines a distribution ratio of the electric braking force and the regenerative braking force according to the required braking force corresponding to the this input signal, and makes a demand for braking force to the electric brake ECU 40 and the hybrid ECU 20. In this way, the brake ECU 36 is able to efficiently brake the hybrid vehicle 100 by executing cooperative control that coordinates the hybrid ECU 20 and the electric brake ECU 40.

In this example embodiment, the electric brake ECU 40 also receives a parking signal from an electric parking brake (EPB) switch 44. Upon receiving a parking signal, the electric brake ECU 40 directs the electric brake mechanism that had been functioning as a regular brake to function as an electric parking brake. The parking brake function may be provided in the electric brake mechanism 38 of each wheel, or it may be provided only in the front wheels or only in the back wheels.

The amount of electric braking force and regenerative braking force generated is adjusted by electric control, so a countermeasure for problems such as disconnection, for example, is necessary. Therefore, in this example embodiment, a hydraulic brake mechanism 46 that functions mainly as a backup brake mechanism in the event that there is a problem with the electric brake mechanism that functions mainly as a regular brake, or the like, is provided in the right front wheel 24FR and the left front wheel 24FL. However, in this example embodiment, as described above, the hydraulic brake mechanism 46 is for backup use when there is a problem with the electric brake mechanism 38, so it is not necessary to perform precise brake control. That is, a simple configuration is employed in which a master cylinder 48 is directly linked to the hydraulic brake mechanisms of the right front wheel 24FR and the left front wheel 24FL, and operating fluid is delivered to the hydraulic brake mechanism 46 in response to a depression operation of the brake pedal. In this case, the hydraulic path from the master cylinder 48 to the wheel cylinder of the electric brake mechanism 38 is easily shortened. As a result, ensuring space for the line, as well as the work of arranging the line, is easier. It is also easier to avoid interference with other component parts, and also contributes to an increased degree of freedom in design. Moreover, the possibility of leakage is reduced due to the shorter line, so the countermeasure against leakage is also easier.

Although not shown, a signal related to the rotating state of the wheel is supplied to the brake ECU 36 from a wheel speed sensor or the like provided near each wheel. The brake ECU 36 then detects whether braking force according to brake control sent to the electric brake ECU 40 is being appropriately generated in each wheel, and is able to reflect the results in the control.

In the description below, a problem with the electric brake mechanism 38 includes one or a combination of a problem with a gear or motor in the electric brake mechanism 38, a disconnection problem in which a wire from the electric brake ECU 40 to the motor has become disconnected, and a problem with the electric brake ECU 40 itself, and the like.

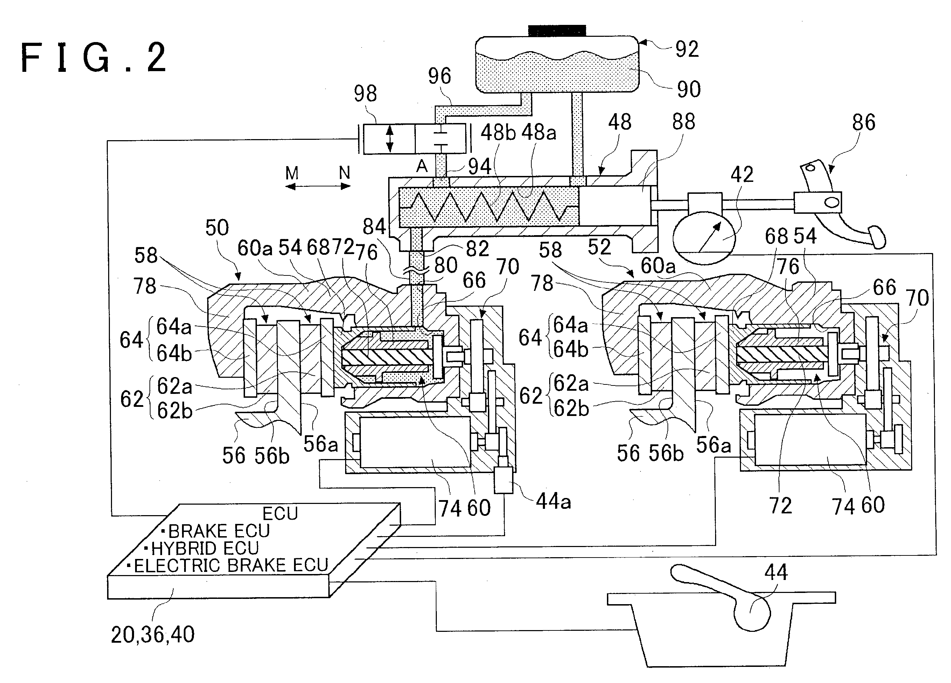

FIG. 2 is a schematic diagram of the internal structure of the master cylinder, the hydraulic brake mechanism, and the electric brake mechanism according to the example embodiment. As described above, in this example embodiment, the brake device of the front wheel 24 is a compound brake device that includes the electric brake mechanism 38 and the hydraulic brake mechanism 46, while the brake device of the rear wheel 26 is a simple configuration brake device that includes only the electric brake mechanism 38. The structure of the brake devices of the front wheel 24 and the rear wheel 26 are the same on the left and the right, so in FIG. 2, a compound brake device 50 for a front wheel 24 and a simple configuration brake device 52 for a rear wheel 26 on only one side will be shown.

First, the structure of the simple configuration brake device 52 having only the electric brake mechanism 38 will be described. A caliper 54 is attached to a vehicle body fixing mount, not shown, for fixing the caliper itself to the vehicle body. The caliper 54 includes a brake pad 58 that is a friction member that generates braking force by being pressed against a disc rotor 56, and a cylinder portion 60 that pushes the brake pad 58. The disc rotor 56 that is a rotating body that rotates with the wheel is between a pair of the brake pads 58, as shown in FIG. 2. Side surfaces 56a and 56b of the disc rotor 56 form friction sliding surfaces, and the pair of brake pads 58 are arranged opposite one another sandwiching the disc rotor 56. Each of the brake pad 58 is formed by a friction element 62 that directly contacts the side surfaces 56a and 56b of the disc rotor 56, and a pad back plate 64 that supports the back side of this friction element 62, i.e., the side that does not contact the disc rotor 56.

The caliper 54 is attached to the vehicle body via a vehicle body fixing mount so as to be able to be displaced in the directions of arrows M and N in FIG. 2. A closed-end hole 66 is bored in the cylinder portion 60 of the caliper 54, and a piston 68 is slidably inserted into this hole 66. One end of a spindle screw member 72 that is connected to an output shaft of a gear train 70 that transmits driving force to advance and retract the piston 68 is rotatably arranged at the bottom of the hole 66. The gear train 70 is formed by a plurality of gears. The gear train 70 reduces the rotation speed from a motor 74 that is rotatably driven according to a command from the electric brake ECU 40 to a predetermined value, and rotates the spindle screw member 72 in a predetermined direction at a predetermined rotation speed. A nut member 76 for advancing and retracting the piston 68 is in mesh with the spindle screw member 72. The nut member 76 advances and retreats in the directions of the arrows M and N by the rotation of the spindle screw member 72. Therefore, when the nut member 76 is moved in the direction of arrow M, the piston 68 is moved toward a pad back plate 64a and presses a friction element 62a against the side surface 56a of the disc rotor 56. When the friction element 62a is pressed against the disc rotor 56, the piston 68 stops sliding. Then when the spindle screw member 72 is rotated and tries to move the nut member 76 in the direction of arrow M after the piston 68 has stopped sliding, a cylinder housing 60a that covers the cylinder portion 60 receives reaction force in the direction of arrow N. As a result, the cylinder housing 60a is displaced in the direction of arrow N with the rotation of the spindle screw member 72.

A pawl portion 78 is formed on the side of the cylinder housing 60a on which the cylinder is not formed, and the pawl portion 78 presses a friction element 62b against a side surface 56b of the disc rotor 56 via a pad back plate 64b, following displacement of the cylinder housing 60a in the direction of arrow N. Therefore, the disc rotor 56 is in a state pressed against the pair of friction elements 62a and 62b, while being sandwiched between the pair of friction elements 62a and 62b, so electric braking force that efficiently brakes the disc rotor 56 is able to be generated.

When the electric braking force is released, the motor 74 is driven in the reverse direction, which rotates the spindle screw member 72 in the opposite direction that it is rotated in when braking, such that the nut member 76 retreats in the direction of arrow N. As a result, the piston 68 is no longer restrained by the nut member 76, so the urging force from the brake pad 58 on the disc rotor 56 is released. When the disc rotor 56 rotates in this state, the brake pad 58 is repelled away by this rotation, so the disc rotor 56 is allowed to rotate freely. A seal member formed by an elastic member, for example, is arranged between the piston 68 and the cylinder housing 60a. This seal member elastically deforms when the piston 68 moves in the direction of arrow M. When the piston 68 is no longer restrained by the nut member 76, the piston 68 receives force in a direction pulling it back in the direction of arrow N by the restoring force of the seal member, so the brake pad 58 is easily separated from the disc rotor 56.

The separating (i.e., disengaging) operation when braking force is released is able to be performed smoothly by providing an elastic body that generates urging force that causes the brake pad 58 to separate (i.e., disengage) in the direction of arrow M on the brake pad 58 that is pushed on by the pawl portion 78.

If the space between the friction element 62 and the disc rotor 56 is too large when the braking force is released, foreign matter or liquid such as water may end up getting in. Also, if the space is too large, there will be a delay when generating braking force the next time, which is undesirable. Conversely, if there is no space, the friction element 62 will be dragged by the disc rotor 56, which will cause running resistance and lead to a deterioration in fuel efficiency (i.e., energy efficiency). Therefore, the space between the friction element 62 and the disc rotor 56 when the braking force is released is preferably set to a minimum value at which dragging will not occur between the friction element 62 and the disc rotor 56. In this example embodiment, the retracted position of the piston 68 is able to be accurately controlled by operating the motor 74 (i.e., by rotating the spindle screw member 72), so the friction element 62 is able to easily be prevented from being dragged. Also, the friction element 62 wears and becomes thin with use, but because the retracting distance of the friction element 62 from the pressed state is able to be controlled by the retracting amount of the motor 74 (i.e., the spindle screw member 72), adjustments when the friction element 62 is worn can also easily be made.

Next, the structure of the compound brake 50 that has the electric brake mechanism 38 and the hydraulic brake mechanism 46 will be described. The structure of the electric brake mechanism 38 is the same as that in the simple configuration brake device 52, so the same reference characters will be used and a description thereof will be omitted. An intake port 80 for introducing operating fluid for operating the hydraulic brake mechanism 46 into the cylinder portion 60 is formed in the cylinder housing 60a of the compound brake device 50. A hydraulic line 84 that extends from a discharge port 82 of the master cylinder 48 is connected to the intake port 80. When operating fluid is delivered from the master cylinder 48 into the cylinder portion 60, the pressure inside the hole 66 increases, moving the piston 68 in the direction of arrow M. The behavior of the brake pad 58, the cylinder housing 60a, and the pawl portion 78 and the like from the movement of the piston 68 is similar to the behavior in the electric brake mechanism described above, so braking force, i.e., hydraulic braking force, is able to be generated.

The master cylinder 48 has a cylinder chamber 48a. A master piston 88 to which a pushrod that extends from a brake pedal 86 is connected is slidably arranged inside this cylinder chamber 48a. The master piston 88 pushes the pushrod to return the brake pedal 86 to its initial position (i.e., the side on which the brake pedal 86 is initially positioned) when elastic force of a spring 48b is received and the brake pedal 86 is not being depressed. When the brake pedal 86 is depressed by the driver, the pushrod enters the master cylinder 48, and the master piston 88 is pushed on. As a result, master cylinder pressure is able to be generated in the cylinder chamber 48a. A reservoir 92 in which operating fluid 90 (brake fluid) is stored is connected to the master cylinder 48 such that the cylinder chamber 48a is always filled with operating fluid 90.

A stroke sensor 42 is provided with the brake pedal 86. This stroke sensor 42 detects a depressed state when the brake pedal 86 is depressed by the driver, and outputs a signal indicative thereof to the brake ECU 36. The brake ECU 36 then calculates the braking force required by the driver (i.e., driver-required braking force) based on the signal from the stroke sensor 42, and cooperatively controls the electric brake ECU 40 and the hybrid ECU 20 to generate the appropriate braking force.

In this example embodiment, the electric brake mechanism 38 is also able to function as an electric parking brake. As shown in FIG. 2, with the electric brake mechanism 38, the spindle screw member 72 is in mesh with the nut member 76, and the gear train 70 is arranged between the spindle screw member 72 and the motor 74, so even if current stops being supplied to the motor 74, it is unlikely that the spindle screw member 72 would rotate in the direction that releases the braking force. Therefore, the state in which the piston 68 is pressed on by the nut member 76 is able to be maintained, so the braking force of the parking brake is able to be maintained. However, in this example embodiment, a parking solenoid 44a is provided that drives a wedge into the output gear of the motor 74, for example, of the compound brake device 50 when the EPB switch 44 is operated and parking is in effect (i.e., the parking brake is activated), in order reliably maintain the braking force when parked. Having the parking solenoid 44a drive in a wedge inhibits looseness or slack due to play in the gears and the like, thus making it possible to guarantee that the parking braking force is maintained.

A discharge port 94 that discharges the operating fluid 90 in the master cylinder 48 to a reservoir 92 is formed in the master cylinder 48 in this example embodiment. The discharge port 94 is formed in a position toward an end position on the side opposite the advancing side of the master piston 88, in the master cylinder 48. A discharge conduit 96 that extends from the reservoir 92 is connected to the discharge port 94, and a valve 98 that functions as a regulating mechanism for regulating the discharge of the operating fluid 90 that is discharged from the master cylinder 48 to the reservoir 92 is arranged in the path of the discharge conduit 96. This valve 98 is, for example, a normally-closed on-off valve that is closed when de-energized and opens when energized. Opening / closing control of the valve 98 is performed by the electric brake ECU 40, for example. When the valve 98 is open, even if the brake pedal 86 is depressed and the master piston 88 moves in the direction of arrow M, the operating fluid 90 will be discharged to the reservoir 92, so the pressure in the cylinder chamber 48a will not rise, and thus not be delivered to the brake device 50. That is, hydraulic braking force will not be generated by the hydraulic brake mechanism of the brake device 50. On the other hand, when the valve 98 is closed, if the brake pedal 86 is depressed and the master piston 88 moves in the direction of arrow M, the operating fluid 90 will not be discharged to the reservoir 92, so the pressure in the cylinder chamber 48a will rise, and thus be delivered to the brake device 50. That is, hydraulic braking force will be generated by the hydraulic brake mechanism of the brake device 50.

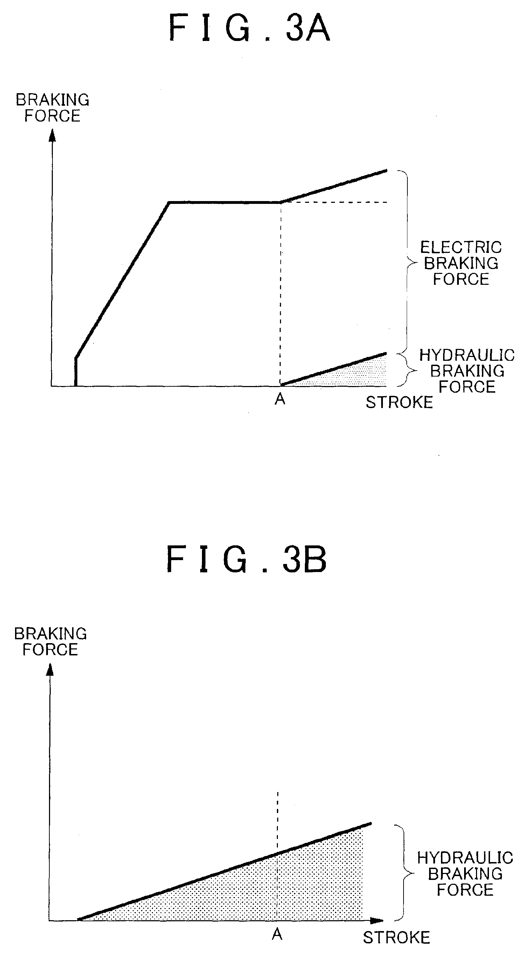

The basic operation of the brake device structured in this way will now be described. As described above, the brake device according to this example embodiment generates braking force using mainly the electric brake mechanism 38. Also, in cases such as when electric braking force is unable to be sufficiently generated due to a problem with the electric brake mechanism 38, the hydraulic brake mechanism 46 is operated as a backup, and braking force is ensured by hydraulic braking force. Therefore, when the electric brake mechanism 38 is operating normally, the valve 98 is open and operating fluid 90 is discharged from the discharge port 94 and delivered to the reservoir 92. As a result, even if the driver depresses the brake pedal 86, hydraulic braking force resulting from this depression operation will basically not be generated. That is, the required braking force based on the detection value of the stroke sensor 42 is provided by braking force other than hydraulic braking force. FIG. 3A is a view showing the relationship between the stroke of the brake pedal 86 and the braking force generated when the electric brake mechanism 38 is operating normally. In this example embodiment, the discharge port 94 is formed in a position slightly toward the stroke starting end side from the end of the stroke of the master cylinder 48. Therefore, the master piston 88 makes a stroke in response to the brake pedal 86, but hydraulic braking force is not generated until the discharge port 94 is closed off by the master piston 88. That is, as shown in FIG. 3A, only electric braking force is generated. Hydraulic braking force starts to be generated beyond point A that corresponds to the position where the discharge port 94 is formed. In this way, electric braking force is able to be used as the main braking force. The delay in the initial rise in braking force is a delay corresponding to play in the brake pedal 86.

As shown in FIG. 3A, pedal reaction force when ABS control is performed, for example, can be generated by generating hydraulic braking force at the point at which point A is passed. In this example embodiment, ABS control is also basically performed by braking force increase / decrease control using the electric brake mechanism 38. In this case, if ABS control is performed with only electric braking force, pedal reaction force as a way for the driver to recognize that ABS control is being performed is unable to be generated when normal hydraulic braking force is used as the regular braking force. On the other hand, as shown in FIG. 3A, pulsation of the operating fluid 90 following an increase and decrease in the braking force is able to be transmitted to the brake pedal 86 via the hydraulic line 84 and the master cylinder 48, by generating hydraulic braking force when the depression amount of the brake pedal 86 is large, which is when ABS control tends to be executed. In FIG. 2, the discharge port 94 is formed in a position near the end of the stroke, so even if ABS control is executed when the electric brake mechanism 38 is operating normally, the generated hydraulic braking force will be very small, and the generation of this hydraulic braking force can be canceled out by adjusting, i.e., increasing or decreasing, the electric braking force, so ABS control can be executed smoothly.

On the other hand, if there is a problem with the electric brake mechanism 38, such as a disconnection that results in electric braking force being unable to be generated, the electric brake ECU 40 stops energizing the valve 98. As a result, the operating fluid 90 in the master cylinder 48 is unable to be discharged to the reservoir 92 via the discharge conduit 96. As a result, as shown in FIG. 3B, hydraulic braking force is able to be generated from the initial stage of depression of the brake pedal 86.

In this way, with a simple structure that forms, the discharge port 94, electric braking force is mainly used when the electric brake mechanism 38 is operating normally, and when there is a problem with the electric brake mechanism 38, hydraulic braking force can be used as backup braking force. A problem with the electric brake mechanism 38 may be detected by, for example, a determination by the electric brake ECU 40 that there is a disconnection, or by an abnormality determination made by sensors, or by an abnormality in the energizing time or the like.

In FIG. 2, the discharge port 94 is shown formed in a position slightly separated from the end of the stroke (i.e., from the stroke end), but this position may also be changed as appropriate. For example, when an abnormality determination of the electric brake mechanism 38 is able to be performed quickly, the position of the discharge port 94 may be a position at the end of the stroke (i.e., a stroke end position). In this case, the structure may be such that no hydraulic braking force at all is used when the electric brake mechanism 38 is operating normally. Conversely, by offsetting the position of the discharge port 94 in the direction of arrow N to the extent shown in FIG 2, hydraulic braking force is able to be used as assist braking force even when the electric brake mechanism 38 is operating normally. For example, when the brake is depressed suddenly, hydraulic braking force is generated earlier, so braking force is able to be generated by electric braking force and hydraulic braking force. Also, even if the closing of the valve 98 is delayed for some reason when there is a problem with the electric brake mechanism 38, hydraulic braking force is able to be generated from the point the discharge port 94 is closed off by the master piston 88.

If the valve 98 is closed due to a problem with the electric brake mechanism 38, the driver is preferably quickly alerted to the problem with the electric brake mechanism 38. For example, the driver is preferably urged to quickly have the problem fixed or the like, by a warning in the form of an indicator light or voice being output.

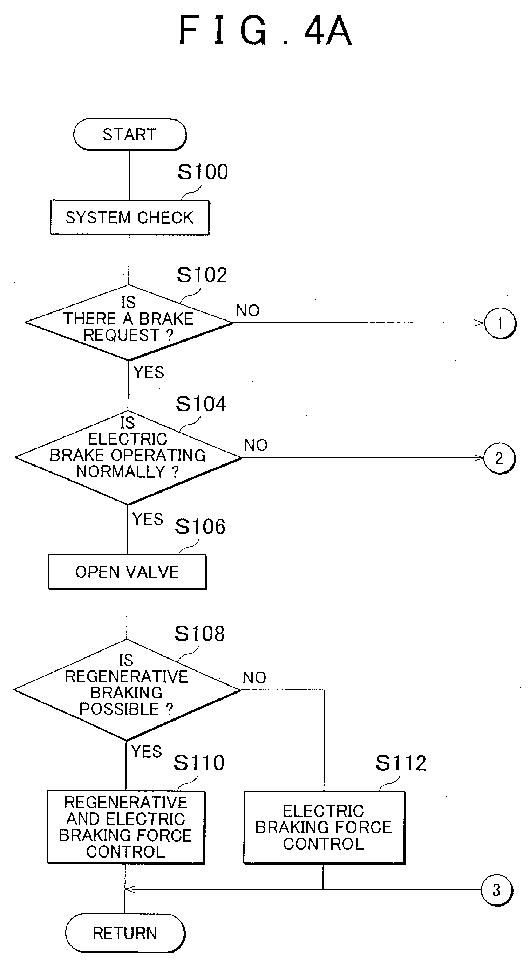

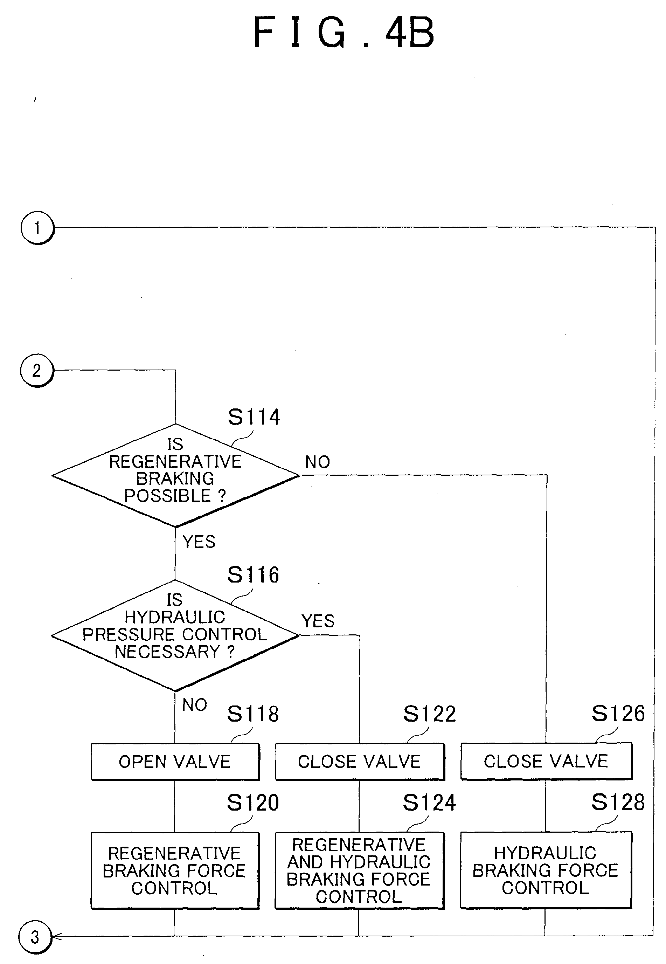

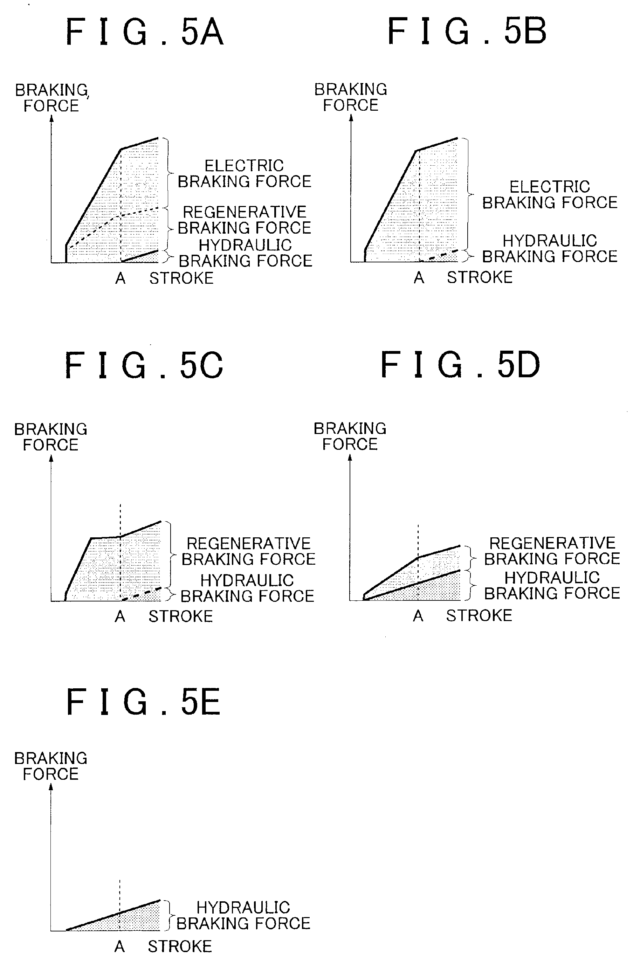

An example of the control when the brake device structured as described above is mounted in the hybrid vehicle 100 in FIG. 1 will now be described with reference to the flowcharts in FIGs. 4A and 4B. First, when an ignition switch of the hybrid vehicle 100 is ON, the brake ECU 36 performs a system check in predetermined cycles (100). In this case, the brake ECU 36 checks the operation of each system via the electric brake ECU 40 and the hybrid ECU 20. Continuing on, when there is a brake request from the driver by the brake pedal 86 being depressed (i.e., YES in S102) and the electric brake mechanism 38 is able to operate normally (i.e., YES in S104), the brake ECU 36 opens the valve 98 (S106). When the valve 98 is a normally-closed on-off valve, the electric brake ECU 40 opens the valve 98 by constantly energizing it when the electric brake mechanism 38 is operating normally, so this state is maintained. Also, when regenerative braking force is able to be generated by communication with the hybrid ECU 20 (i.e., YES in S108), the brake ECU 36 performs electric braking force and regenerative braking force control (S110) to generate the required braking force by cooperative control of the electric brake ECU 40 and the hybrid ECU 20. FIG. 5A is a view illustrating the manner in which cooperative control is performed up to point A in FIG. 2, by electric braking force and regenerative braking force, when the electric brake mechanism 38 is operating normally. Moreover, FIG. 5A illustrates the manner in which hydraulic braking force is generated in addition to electric braking force and regenerative braking force from the point at which depression of the brake pedal 86 advances and the master piston 88 passes the discharge port 94. In this case, the generation of electric braking force is able to be reduced by the amount of regenerative braking force that is generated, so the electric power consumption for driving the electric brake mechanism 38 is able to be reduced. It is possible to not have additional hydraulic braking force be generated by forming the discharge port 94 at the end of the stroke.

If regenerative braking force is unable to be generated in step S108 due to the battery 32 being fully charged, for example, (i.e., NO in S108), the brake ECU 36 executes electric braking force control that generates only electric braking force by the electric brake ECU 40 (S 112). As shown in FIG. 5B, in this case as well, hydraulic braking force is generated in addition to electric braking force and regenerative braking force from the point at which depression of the brake pedal 86 advances and the master piston 88 passes the discharge port 94, but it is possible to not have additional hydraulic braking force be generated by forming the discharge port 94 at the end of the stroke.

If there is a problem with the electric brake mechanism 38 in step S104 (i.e., NO in S104), and regenerative braking force is able to be generated (i.e., YES in S114), the brake ECU 36 compares the required braking force with the regenerative braking force that is able to be generated. If sufficient braking force is able to be provided by only regenerative braking force (i.e., including if sufficiently safe braking is able to be performed even if the entire required braking force is not provided by regenerative braking force), and if hydraulic braking force assistance is not necessary (i.e., NO in S116), the brake ECU 36 opens the valve 98 (S118). That is, the electric brake ECU 40 continues to energize the valve 98 to keep it open. Then the brake ECU 36 controls the hybrid ECU 20 to execute regenerative braking force control to generate the required braking force (S120). As shown in FIG. 5C, in this case as well, hydraulic braking force is generated in addition to regenerative braking force from the point at which depression of the brake pedal 86 advances and the master piston 88 passes the discharge port 94, but it is possible to not have additional hydraulic braking force be generated by forming the discharge port 94 at the end of the stroke.

If the regenerative braking force that is able to be generated is less than the required braking force in step S116, that is, if additional hydraulic braking force is necessary to provide the required braking force (i.e., YES in S116), the electric brake ECU 40 stops energizing the valve 98, thus closing the valve 98 (S122). As a result, the operating fluid 90 is inhibited from being discharged from the discharge port 94 to the reservoir 92. That is, hydraulic braking force is able to be generated from the initial stage of depression of the brake pedal 86. The brake ECU 36 controls the hybrid ECU 20 to execute regenerative braking force control, and executes backup control of the hydraulic braking force according to the depression amount of the brake pedal 86 (S124). FIG. 5D shows the manner in which braking force is generated in this case. In this way, even if the brake pedal 86 is abruptly operated when there is a problem with the electric brake mechanism 38, the maximum possible braking force will be generated, so braking force and responsiveness are able to be ensured.

If in step S 114 regenerative braking force is unable to be generated in addition to electric braking force (i.e., NO in S114), the electric brake ECU 40 stops energizing the valve 98, thus closing the valve 98 (S126). As a result, the operating fluid 90 is inhibited from being discharged from the discharge port 94 to the reservoir 92. That is, hydraulic braking force is able to be generated from the initial stage of depression of the brake pedal 86. As a result, backup control of the hydraulic braking force according to the depression amount of the brake pedal 86 is executed (S128). FIG. 5E shows the manner in which braking force is generated in this case. In this way, even if regenerative braking force is also unable to be generated when there is a problem with the electric brake mechanism 38, the maximum possible braking force will be generated, so braking force and responsiveness are able to be ensured.

If there is no request for braking in step S102 (i.e., NO in S102), the process returns to step S100, and the process is executed in the next cycle.

In the example described above, the valve 98 is an electromagnetic valve that performs a simple opening / closing operation, but the valve 98 may also be a linear valve capable of precisely controlling the opening / closing amount. In the case of a linear valve, when the valve is completely open and completely closed, the discharge timing of the operating fluid 90 from the discharge port 94 to the reservoir 92 can be controlled, similar to the valve 98. Also, the amount of hydraulic braking force when generating hydraulic braking force can be controlled by controlling the opening / closing amount. For example, with the valve 98 described above, when ABS control is executed when the electric brake mechanism 38 is operating normally, pedal reaction force is unable to be obtained unless the master piston 88 closes off the discharge port 94. On the other hand, with a linear valve, pulsation of the operating fluid 90 can be easily transmitted to the brake pedal 86 side, thus enabling the driver to feel the change in the pedal reaction force, by controlling the discharge amount of operating fluid 90 from the discharge port 94 to the reservoir 92.

Also, in the example embodiment described above, the electric brake mechanism 38 is operating normally, and the valve 98 is opened so hydraulic braking force is not generated until the master piston 88 closes off the discharge port 94, regardless of whether regenerative braking force is able to be generated. In another example embodiment, when the electric brake mechanism 38 is operating normally, the valve 98 may also be closed from the start such that hydraulic braking force is able to be generated from the start, regardless of whether regenerative braking force is able to be generated. In this case, the amount of electric braking force generated is able to be reduced by the amount of hydraulic braking force that is generated, so the electric power consumption for operating the electric brake mechanism 38 is able to be reduced.

Also, in the example embodiment described above, the valve 98 that controls the discharge from the discharge port 94 is provided, but this valve 98 may also be omitted. That is, the time at which hydraulic braking force starts to be generated is delayed from the time at which electric braking force starts to be generated, by discharging the operating fluid 90 in the master cylinder 48 to the reservoir 92 until the brake pedal 86 is depressed a predetermined amount (until point A, for example). In this case, when the depression amount of the brake pedal 86 exceeds point A, the operating fluid 90 is able to be delivered to the hydraulic brake mechanism 46, thus enabling hydraulic braking force to be generated. As a result, a brake device having a simple structure is able to be formed by having the hydraulic brake mechanism 46 function as a backup brake device when the pedal 86 is depressed to a position beyond the discharge port 94, in the event that electric braking force is unable to be generated when there is a problem with the electric brake mechanism 38.

Also, in the example embodiment described above, a problem with the electric brake mechanism 38 is detected by the electric brake ECU 40. However, the brake ECU 36 may also compare the required braking force obtained from the stroke sensor 42 with an estimated braking force generating amount calculated based on a signal from a sensor arranged inside the caliper 54 or the like, and control the amount of hydraulic braking force generated, by performing opening / closing control of the valve 98 when this estimated amount is less than the braking force corresponding to an operation of the brake pedal 86, for example. In this case, hydraulic braking force also may be quickly generated as backup braking force in the event that there is a problem with the electric brake ECU 40 itself.

In the example embodiment described above, the brake device having the discharge port 94 is mounted in the hybrid vehicle 100, but in another example embodiment, the brake device of the example embodiment may be applied to an electric vehicle that does not have an engine, and effects similar to those of the example embodiment described above may be obtained. Also, when applied to a vehicle that does not have a running motor, but effects similar to those of the example embodiment described above are still able to be obtained, minus only the addition of the regenerative braking force. Further, in the example shown in FIG. 2, a disc brake device is illustrated as the brake device, but effects similar to those of the example embodiment are also able to be obtained when applied to a drum brake device.

## Claims

1. A brake device **characterized by** comprising:
an electric brake mechanism (38) configured to apply electric braking force to a rotating body (56) that rotates together with a wheel (24FR, 24FL), by pressing a friction member (62) against the rotating body (56) with driving force generated by operation of a motor (74);
a hydraulic brake mechanism configured to apply hydraulic braking force to the rotating body (56) by pressing the friction member (62) against the rotating body (56) with driving force generated by supplying operating fluid (90);
a control portion (40) configured to direct the electric brake mechanism (38) to generate the electric braking force according to an operation amount of a brake pedal (86) operated by a driver;
a reservoir (92) configured to store the operating fluid (90); and
a master cylinder (48) having a discharge port (94) discharging the operating fluid (90) inside of the master cylinder (48) to the reservoir (92), a volume of the master cylinder (48) changing according to the operation amount of the brake pedal (86), the master cylinder (48) being configured to deliver the operating fluid (90) to the hydraulic brake mechanism according to a reduction in the volume.

2. The brake device according to claim 1, wherein the discharge port (94) is configured to discharge the operating fluid (90) in the master cylinder (48) to the reservoir (92) until the brake pedal (86) is depressed a predetermined amount.

3. The brake device according to claim 2, wherein the master cylinder (48) is configured such that when the brake pedal (86) is depressed the predetermined amount, the operating fluid (90) in the master cylinder (48) is unable to be discharged to the reservoir (92), and such that hydraulic pressure within the master cylinder (48) rises and hydraulic braking force is generated.

4. The brake device according to claim 2 or 3, further comprising a regulating mechanism (98) provided in a flow path of the operating fluid (90) between the discharge port (94) and the reservoir (92), the regulating mechanism (98) being configured to regulate the discharge of the operating fluid (90) discharged from the master cylinder (48) to the reservoir (92).

5. The brake device according to claim 4, wherein the regulating mechanism (98) includes an on-off valve.

6. The brake device according to claim 5, wherein the on-off valve is a normally-closed valve that closes when de-energized and opens when energized.

7. The brake device according to any one of claims 4 through 6, wherein the control portion (40) is configured to control a generated amount of the hydraulic braking force by controlling the regulating mechanism (98), when the electric braking force is less than a braking force corresponding to an operation of the brake pedal (86).

8. The brake device according to any one of claims 4 through 6, further comprising a regenerative brake mechanism (18, 20, 30, 34) configured to generate regenerative braking force by regeneratively driving a motor (18) capable of supplying driving force for running to the wheel (24FR, 24FL), the control portion (40) being configured to control a generated amount of the hydraulic braking force by controlling the regulating mechanism (98), when braking force obtained by combining the electric braking force and the regenerative braking force is less than braking force corresponding to an operation of the brake pedal (86).

## Patentansprüche

1. Bremseinrichtung, **gekennzeichnet durch**:
einen elektrischen Bremsmechanismus (38), der so konfiguriert ist, um elektrische Bremskraft auf einen sich zusammen mit einem Rad (24FR, 24FL) rotierenden Körper (56) **durch** Drücken eines Reibungselements (62) an den rotierenden Körper (56) mithilfe der **durch** Betätigung eines Motors erzeugten Betätigungskraft auszuüben;
einen hydraulischen Bremsmechanismus, der so konfiguriert ist, um hydraulische Bremskraft auf einen sich rotierenden Körper (56) **durch** Drücken des Reibungselements (62) an den sich rotierenden Körper (56) mithilfe der **durch** Zuführung des Betriebsfluides (90) erzeugten Betätigungskraft auszuüben;
einen Steuerabschnitt (40), der so konfiguriert ist, um den elektrischen Bremsmechanismus (38) zu leiten, die elektrische Bremskraft entsprechend einem Betätigungsbetrag eines von einem Fahrer bestätigten Bremspedals (86) zu erzeugen;
ein Reservoir (92), das so konfiguriert ist, um das Betriebsfluid (90) zu speichern; und
einen Hauptzylinder (48) mit einer Austrittsöffnung (94), die das Betriebsfluid (90) innerhalb des Hauptzylinders (48) zum Reservoir (92) abführt, wobei sich ein Volumen des Hauptzylinders (48) entsprechend dem Betätigungsbetrag des Bremspedals (86) verändert, und der Hauptzylinder (48) so konfiguriert ist, um das Betriebsfluid (90) entsprechend der Verringerung des Volumens dem hydraulischen Bremsmechanismus zuzuführen.

2. Bremseinrichtung nach Anspruch 1, wobei die Austrittsöffnung (94) so konfiguriert ist, um das Betriebsfluid (90) innerhalb des Hauptzylinders (48) zum Reservoir (92) abzuführen, bis das Bremspedal (86) um einen vorbestimmten Betrag niedergedrückt wird.

3. Bremseinrichtung nach Anspruch 2, wobei der Hauptzylinder (48) so konfiguriert ist, dass, wenn das Bremspedal (86) um den vorbestimmten Betrag niedergedrückt wird, das Betriebsfluid (90) innerhalb des Hauptzylinders (48) nicht mehr zum Reservoir (92) abgeführt werden kann, und dass der Hydraulikdruck innerhalb des Hauptzylinders (48) steigt und die hydraulische Bremskraft erzeugt wird.

4. Bremseinrichtung nach Anspruch 2 oder 3, die ferner einen im Strömungsweg des Betriebsfluides (90) zwischen der Austrittsöffnung (94) und dem Reservoir (92) bereitgestellten Reguliermechanismus (98) aufweist, welcher so konfiguriert ist, um das Abführen des vom Hauptzylinder (48) zum Reservoir (92) abgeführten Betriebsfluides (90) zu regulieren.

5. Bremseinrichtung nach Anspruch 4, wobei der Reguliermechanismus (98) ein Ein-/Ausventil aufweist.

6. Bremseinrichtung nach Anspruch 5, wobei das Ein-/Ausventil ein normalerweise geschlossenes Ventil ist, das nicht-energierten Zustand schließt und im energierten Zustand öffnet.

7. Bremseinrichtung nach einem der Ansprüche 4 bis 6, wobei der Steuerabschnitt (40) so konfiguriert ist, um einen erzeugten Betrag der hydraulischen Bremskraft durch Steuerung des Reguliermechanismus (98) zu steuern, wenn die elektrische Bremskraft kleiner als eine der Betätigung des Bremspedals (86) entsprechende Bremskraft ist.

8. Bremseinrichtung nach einem der Ansprüche 4 bis 6, die ferner einen regenerativen Bremsmechanismus (18, 20, 30, 34) aufweist, der so konfiguriert ist, um regenerative Bremskraft durch regeneratives Antreiben eines Motors (18), welcher Antriebskraft zum Drehen der Räder (24FR, 24FL) bereitstellen kann zu erzeugen, wobei der Steuerabschnitt (40) so konfiguriert ist, um einen erzeugten Betrag der hydraulischen Bremskraft durch Steuerung des Reguliermechanismus (98) zu steuern, wenn eine durch Kombination der elektrischen Bremskraft und der regenerativen Bremskraft erhaltene Bremskraft kleiner als eine der Betätigung des Bremspedals (86) entsprechende Bremskraft ist.

## Revendications

1. Dispositif de frein **caractérisé en ce qu'**il comprend :
un mécanisme de frein électrique (38) configuré pour appliquer la force de freinage électrique sur un corps rotatif (56) qui tourne conjointement avec une roue (24FR, 24FL), en appuyant un élément de friction (62) contre le corps de rotation (56) avec la force d'entraînement générée par le fonctionnement d'un moteur (74) ;
un mécanisme de frein hydraulique configuré pour appliquer la force de freinage hydraulique sur le corps rotatif (56) en appuyant l'élément de friction (62) contre le corps de rotation (56) avec la force d'entraînement générée en fournissant le fluide de fonctionnement (90) ;
une partie de commande (40) configurée pour diriger le mécanisme de frein électrique (38) afin de générer la force de freinage électrique selon une quantité de fonctionnement d'une pédale de frein (86) actionnée par un conducteur ;
un réservoir (92) configuré pour stocker le fluide de fonctionnement (90) ; et
un maître-cylindre (48) ayant un orifice de décharge (94) déchargeant le fluide de fonctionnement (90) à l'intérieur du maître-cylindre (48) vers le réservoir (92), un volume du maître-cylindre (48) changeant selon la quantité de fonctionnement de la pédale de frein (86), le maître-cylindre (48) étant configuré pour distribuer le fluide de fonctionnement (90) au mécanisme de frein hydraulique selon une réduction dans le volume.

2. Dispositif de frein selon la revendication 1, dans lequel l'orifice de décharge (94) est configuré pour décharger le fluide de fonctionnement (90) dans le maître-cylindre (48) vers le réservoir (92) jusqu'à ce que la pédale de frein (86) soit enfoncée selon une quantité prédéterminée.

3. Dispositif de frein selon la revendication 2, dans lequel le maître-cylindre (48) est configuré de sorte que lorsque la pédale de frein (86) est enfoncée selon la quantité prédéterminée, le fluide de fonctionnement (90) dans le maître-cylindre (48) ne peut pas être déchargé dans le réservoir (92) et de sorte que la pression hydraulique à l'intérieur du maître-cylindre (48) monte et que la force de freinage hydraulique soit générée.

4. Dispositif de frein selon la revendication 2 ou 3, comprenant en outre un mécanisme de régulation (98) prévu dans une trajectoire d'écoulement du fluide de fonctionnement (90) entre l'orifice de décharge (94) et le réservoir (92), le mécanisme de régulation (98) étant configuré pour réguler la décharge du fluide de fonctionnement (90) déchargé du maître-cylindre (48) au réservoir (92).

5. Dispositif de frein selon la revendication 4, dans lequel le mécanisme de régulation (98) comprend une soupape de marche-arrêt.

6. Dispositif de frein selon la revendication 5, dans lequel la soupape de marche-arrêt est une soupape normalement fermée qui se ferme lorsqu'elle n'est pas alimentée et s'ouvre lorsqu'elle est alimentée.

7. Dispositif de frein selon l'une quelconque des revendications 4 à 6, dans lequel la partie de commande (40) est configurée pour commander une quantité générée de force de freinage hydraulique en commandant le mécanisme de régulation (98), lorsque la force de freinage électrique est inférieure à une force de freinage correspondant à un fonctionnement de la pédale de frein (86).

8. Dispositif de frein selon l'une quelconque des revendications 4 à 6, comprenant en outre un mécanisme de frein régénératif (18, 20, 30, 34) configuré pour générer la force de freinage régénérative en entraînant un moteur (18) par régénération capable de fournir la force d'entraînement de roulement à la roue (24FR, 24FL), la partie de commande (40) étant configurée pour commander une quantité générée de la force de freinage hydraulique en commandant le mécanisme de régulation (98), lorsque la force de freinage obtenue en combinant la force de freinage électrique et la force de freinage régénérative est inférieure à la force de freinage correspondant à un fonctionnement de la pédale de frein (86).
